# FASCICULE DE BREVET EUROPEEN

(11) **EP 1 382 476 B1**
(45) Date de publication et mention de la délivrance du brevet: **30.08.2006**
(21) Numéro de dépôt: 03015773.9
(22) Date de dépôt: 10.07.2003
(51) Int. Cl.: B60K 17/04

(54) **Chaine de traction comportant un mecanisme de changement de rapport integre dans une roue et procédé de changement de rapport associé**
Antriebstrang mit einer in dem Rad integrierten Schaltvorrichtung und zugehöriges Schaltverfahren
Drive train with a shifting mechanism incorporated in a wheel and shifting method thereof

(30) Priorité: 15.07.2002 FR 0208930
(43) Date de publication de la demande: 21.01.2004
(73) Titulaire: Conception et Développement Michelin S.A., 1762 Givisiez (CH)
(72) Inventeur: Laurent, Daniel, 1723 Marly (CH); Olsommer, David, 1700 Fribourg (CH); Varenne, Pierre, 1740 Neyruz (CH); Magne, Pierre Alain, 1566 Saint Aubin (CH)
(74) Mandataire: Bauvir, Jacques

(56) Documents cités:
- EP-A- 0 700 805
- EP-A- 0 807 772
- DE-A- 1 655 194
- DE-A- 19 723 776
- US-A- 4 083 421

## Description

La présente invention concerne les véhicules automobiles à traction électrique. Elle concerne aussi bien les véhicules purement électriques que les véhicules de type hybride, notamment les véhicules de type hybride série.

Dans certaines réalisations évoquées ci-dessus, la ou les roue(s) motrice(s) de ces véhicules ne sont entraînée(s) que par un moteur électrique. Dans ce cas, il est envisageable d'intégrer un moteur électrique de traction directement dans une roue, plutôt que de l'installer sur le châssis du véhicule, ce qui permet de supprimer l'arbre de transmission. Par ailleurs, l'un des avantages en soi de la traction électrique tient au caractère constant du couple qu'est capable de développer un moteur électrique sur toute la plage de vitesse de rotation.

Bien entendu, pour tirer tout le bénéfice de la configuration évoquée (moteur électrique de traction intégré dans une roue), il est souhaitable de pouvoir créer des ensembles de liaison au sol aussi compacts et aussi légers que possible. Notamment, il est souhaitable que la chaîne de traction en elle-même, allant du moteur électrique à la roue, soit aussi légère et compacte que possible, d'autant plus qu'il s'agit des masses non suspendues.

On a déjà rappelé que les moteurs électriques sont capables de développer des couples assez importants et sensiblement constants sur toute la gamme de vitesse. Mais, on sait par ailleurs que l'encombrement d'un moteur électrique est sensiblement proportionnel au couple pour lequel il est conçu. Aussi, pour disposer d'un couple à la roue aussi important que possible tout en ayant un moteur électrique de traction très compact, il est souhaitable d'installer une démultiplication totale la plus grande possible entre l'arbre du moteur électrique et l'axe de la roue.

Si l'on augmente la démultiplication totale installée entre l'arbre du moteur électrique et l'axe de la roue, on augmente aussi la vitesse du moteur à la vitesse maximale du véhicule. Or, les contraintes mécaniques et électriques que subit un moteur électrique augmentent grandement avec sa vitesse de rotation. Si l'on se fixe une limite maximale pour la vitesse de rotation du moteur électrique, il peut être souhaitable de disposer d'un choix de rapports de démultiplication totale entre le moteur électrique et la roue. Il faut donc intégrer également dans la roue un mécanisme de changement de rapport qui permet soit d'obtenir un couple important à la roue, soit d'atteindre la vitesse maximale du véhicule.

Se pose alors le problème d'une conception aussi compacte que possible d'un tel mécanisme de changement de rapport, afin de ne pas aboutir à une solution globalement (c'est à dire moteur électrique plus mécanisme de changement de rapport) plus pénalisante en termes d'encombrement et de masse qu'un moteur électrique en prise directe, dimensionné pour être capable de développer sur l'axe roue le couple maximal que l'on recherche en augmentant la démultiplication finale. Il est en outre nécessaire de concevoir un système de commande permettant de passer d'un rapport à l'autre d'une façon aussi simple et rapide que possible. Et il faut que les moyens nécessaires pour passer d'un rapport à l'autre n'alourdissent pas l'ensemble de la chaîne de transmission.

Une chaîne de traction conformément au préambule de la revendication 1 est divulguée dans le document DE 197 23 776 A.

L'invention propose une chaîne de traction pour véhicule automobile, telle que décrite dans la revendication 1.

Dans une mise en oeuvre plus spécialement avantageuse, l'invention propose un mécanisme de changement de rapport comportant un crabot permettant de sélectionner l'un ou l'autre des rapports. Avantageusement, ledit mécanisme est dépourvu de tout embrayage à friction. C'est à dire qu'il ne comporte que des moyens d'engagement mécaniquement positifs. En outre et de préférence, l'invention fait usage d'un moteur électrique synchrone autopiloté sans balais qui, par nature, comporte un capteur de position du rotor. L'invention n'utilise que ce capteur de position du rotor du moteur et un ensemble capteur associé au mécanisme de changement de rapport pour déterminer la vitesse de rotation de la roue considérée et parvenir à tous les changements de rapports nécessaires. De préférence, l'arrangement ne comporte que deux rapports seulement.

L'invention est illustrée au moyen des figures jointes, dans lesquelles :
- la figure 1 montre une roue de véhicule dans laquelle est intégrée la chaîne électrique de traction selon l'invention, vue en coupe selon C/C indiqué à la figure 2 ;
- la figure 2 est une vue selon A à la figure 1 ;
- les figures 3A, 3B et 3C sont des perspectives partielles montrant la chaîne électromécanique de transmission ;
- les figures 4A, 4B et 4C sont des coupes selon 4/4 à la figure 2, montrant les organes essentiels du mécanisme de changement de rapport à deux rapports ;
- la figure 5 est une vue partielle de la chaîne électromécanique de transmission ;
- la figure 6 est un chronogramme montrant l'évolution au cours du temps pendant les changements de rapports de la position de la fourchette de commande, de la vitesse du moteur de traction et du couple du moteur de traction.

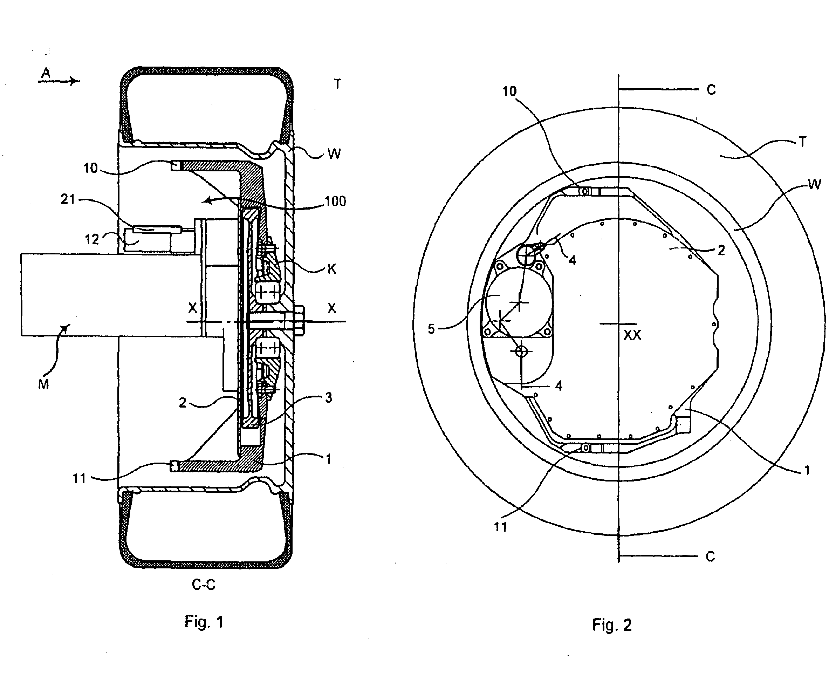

On voit aux figures 1 et 2 une roue W sur laquelle est monté un pneumatique T. La roue est montée rotative sur un porte-roue K, l'axe XX étant son axe de rotation. On voit également un carter 1 fermé par un couvercle 2 et par la partie statorique S d'un moteur électrique M de traction. Le carter 1 comporte un prolongement supérieur 10 et un prolongement inférieur 11 aux extrémités desquels peut être attaché un système de suspension de la roue W par rapport à un châssis ou à la caisse du véhicule. On ne montre ici que les organes dits non suspendus d'une liaison au sol pour véhicule automobile.

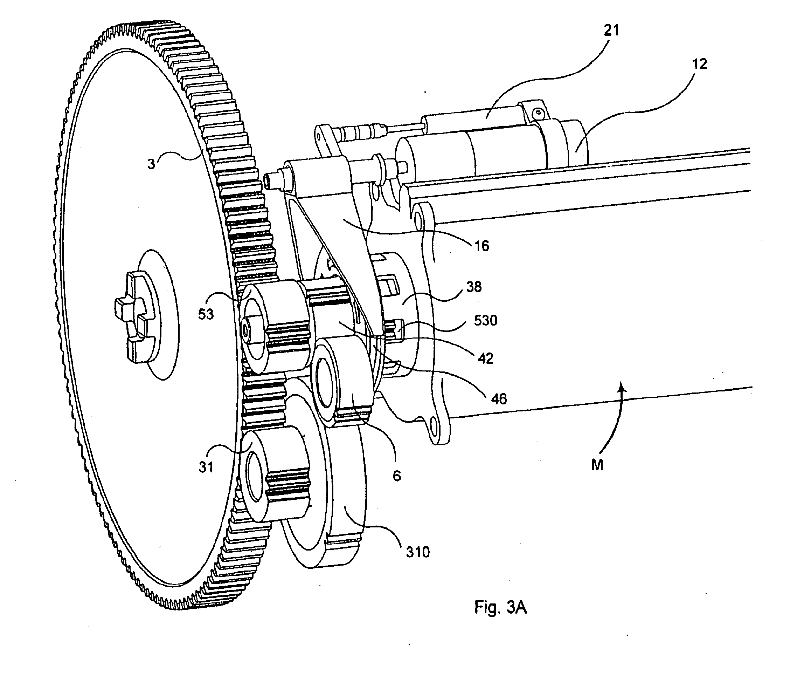

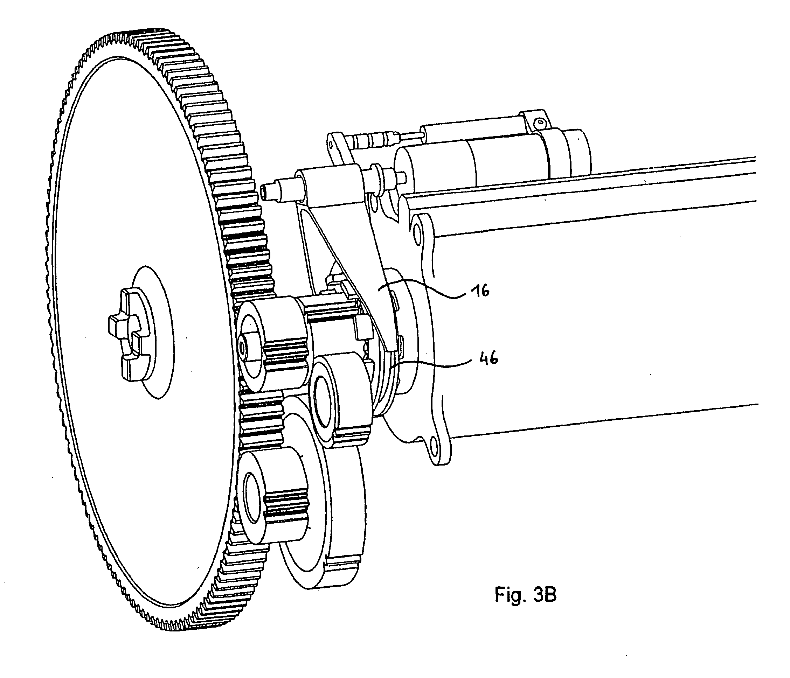

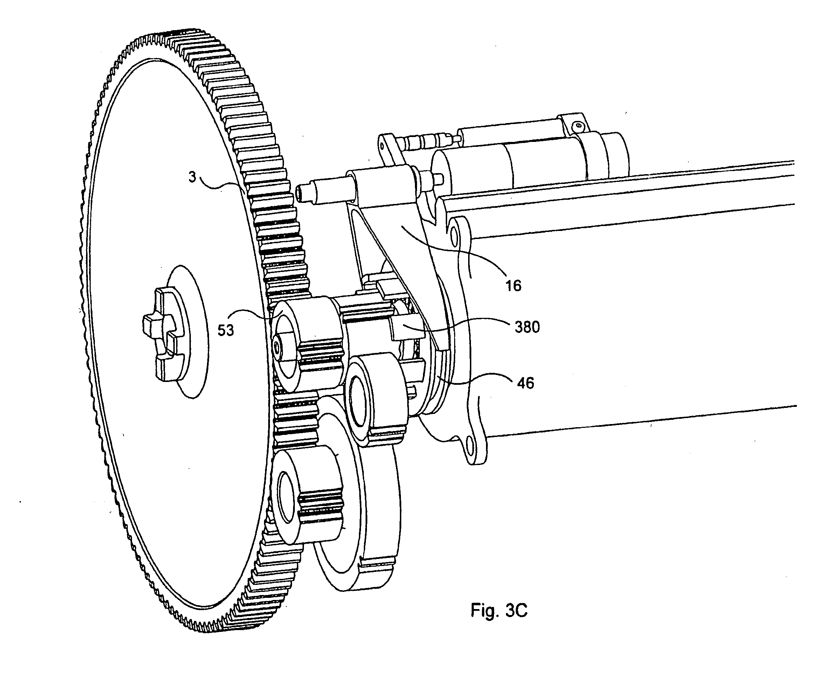

Le carter 1 délimite un espace clos avec le couvercle 2 et le moteur électrique M. Cet espace clos peut contenir la quantité d'huile nécessaire pour assurer la lubrification des organes mécaniques qui y sont installés. A l'intérieur du carter 1, on voit une roue dentée 3 (voir figure 1 et figures 3), rotative autour de l'axe XX, en prise directe avec la roue W.

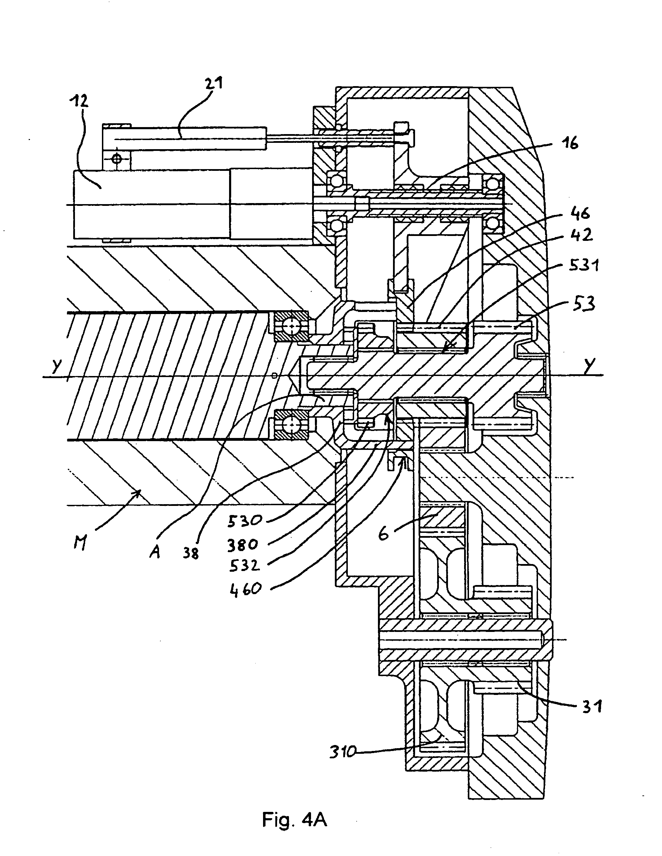

A la figure 3A, on voit que la roue dentée 3 est engrenée avec un pignon de première 31. Le pignon de première 31 est coaxial et solidaire d'un pignon auxiliaire 310 de diamètre plus grand que le diamètre du pignon de première 31. Le pignon de première 31 et le pignon auxiliaire 310 forment une seule et même pièce mécanique monobloc rotative (voir figure 4A). Le pignon auxiliaire 310 est engrené sur un pignon intermédiaire 6. Le pignon 6 permet de maintenir le même sens de rotation du moteur électrique quel que soit le rapport engagé.

Par ailleurs, la roue dentée 3 est engrenée avec un pignon de seconde 53. Le pignon de seconde 53 est coaxial et solidaire d'un pignon crabotable 530 (voir notamment figure 3A et figure 4A). Le pignon de seconde 53 et le pignon crabotable 530 forment une pièce mécanique monobloc rotative. Cette pièce mécanique comporte un dégagement périphérique 532 dépourvu de denture, jouxtant le pignon crabotable 530 (voir notamment figure 4A). Cette pièce mécanique comporte également une portée intermédiaire lisse 531. Un pignon fou crabotable 42 est montée sur la portée intermédiaire lisse 531, coaxialement au pignon de seconde 53, de façon à pouvoir tourner librement par rapport au pignon de seconde 53.

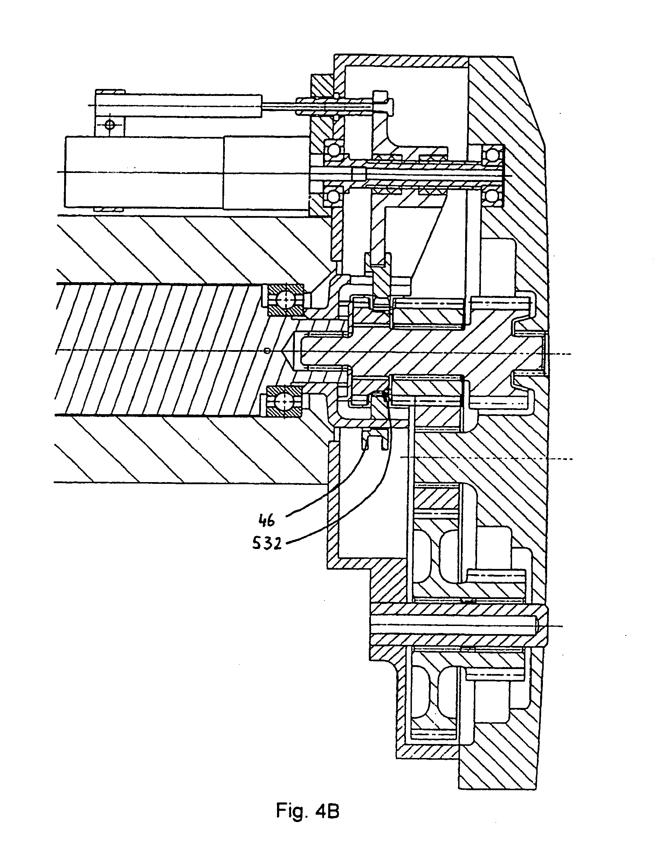

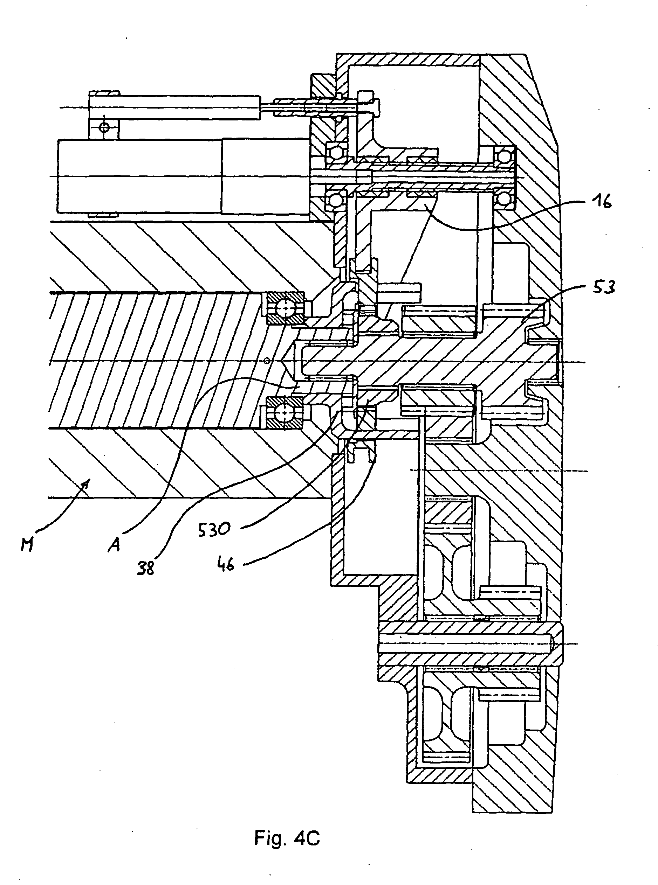

Le mécanisme de changement de rapport comporte un crabot 46 permettant de sélectionner un rapport. Dans la réalisation illustrée, le crabot 46 comporte une denture intérieure identique à la denture (extérieure) du pignon crabotable 530 et du pignon fou crabotable 42. Le crabot 46 peut être craboté soit sur le pignon fou crabotable 42 pour disposer d'une démultiplication (figure 3A et 4A), soit sur le pignon crabotable 530 pour entraîner en prise directe (figure 3C et 4C), ou encore le crabot 46 peut être amené dans une position non crabotée dans laquelle sa denture intérieure est en regard du dégagement 532 libre de toute denture (figures 3B et 4B).

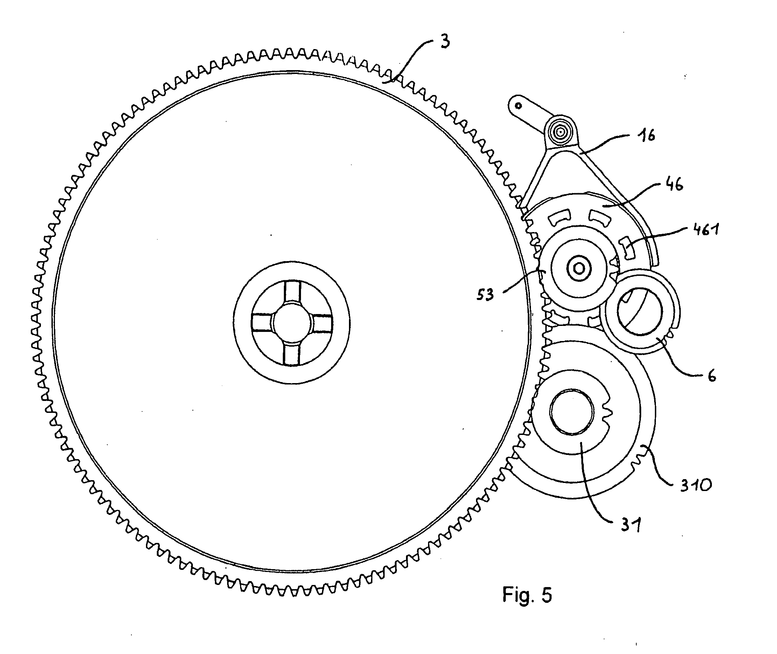

Par ailleurs, le crabot 46 comporte une gorge périphérique extérieure 460 et des évidements 461 (voir figure 5). On voit un bout d'arbre A (figures 4) du rotor du moteur électrique M, l'axe YY étant l'axe de rotation de l'arbre A. Une cloche 38 est montée solidaire de l'arbre A du rotor du moteur électrique M. Le crabot 46 est centrée par la cloche 38. Une fourchette 16 est engagée radialement par l'extérieur dans la gorge périphérique 460 aménagée sur le crabot 46. La cloche 38 comporte des doigts 380 engagés dans les évidements 461 du crabot 46. Le crabot 46 peut glisser axialement par rapport à la cloche, tout en étant solidaire en rotation de celle-ci.

La fourchette 16 est commandée par un moto-réducteur 12. Un capteur de position 21 est relié à la fourchette 16. Le crabot 46 peut prendre trois positions :
- une position dans laquelle le crabot 46 entraîne la roue dentée via un pignon intermédiaire 6 permettant d'inverser la vitesse de rotation ; le crabot 46 est alors craboté avec le pignon fou 42, donc en prise avec le pignon de première 31, via les pignons intermédiaire 6 et auxiliaire 310 (voir notamment figures 3A et 4A) ; c'est ladite autre voie mécanique de transmission ;
- une position dans laquelle il est craboté avec le pignon auxiliaire 530, donc en prise avec le pignon de deuxième 53 (voir notamment figures 3C et 4C),
- une position intermédiaire neutre, visible aux figure 3B et 4B.

Le pignon de première 31 et le pignon de seconde 53 sont entraînés en permanence par la roue dentée 3. De denture identique, ils tournent tous les deux à la même vitesse angulaire. Le pignon de seconde 53, lorsqu'il est en prise avec l'arbre A du rotor du moteur électrique M via le second pignon auxiliaire 530, le crabot 46 et la cloche 38, est en prise directe avec le moteur M. En revanche, lorsque le couple de traction passe par le pignon de première 31, via la cloche 38, le crabot 46, le pignon fou 42, le pignon intermédiaire 6 et le pignon auxiliaire 310, il y a entre l'arbre A du rotor du moteur électrique M et le pignon de première 31 un rapport de démultiplication correspondant au rapport R entre le nombre de dents du pignon auxiliaire 310 et le nombre de dents du pignon fou 42.

Notons encore que, dans ladite autre voie mécanique de transmission, le crabot entraîne la roue dentée 3 via un pignon intermédiaire 6 permettant d'inverser la vitesse de rotation. Ainsi le pignon 6 permet de maintenir le même sens de rotation du moteur électrique quel que soit le rapport engagé : prise directe ou autre voie mécanique de transmission. En variante (non représentée aux figures), on pourrait très bien piloter le moteur électrique dans des sens de rotation opposés pour un rapport et pour l'autre rapport ; dans cette variante, dans ladite autre voie mécanique de transmission, il n'y aurait pas de pignon intermédiaire pour inverser le sens de rotation.

Un changement de rapport implique un changement quasi instantané et important de la vitesse du moteur électrique de traction. Lorsque le véhicule est équipé de plusieurs roues motrices équipées chacune d'un ensemble moteur électrique et boite de vitesse selon l'invention, le changement peut par exemple se faire en synchronisme au moins sur les roues d'un même essieu du véhicule.

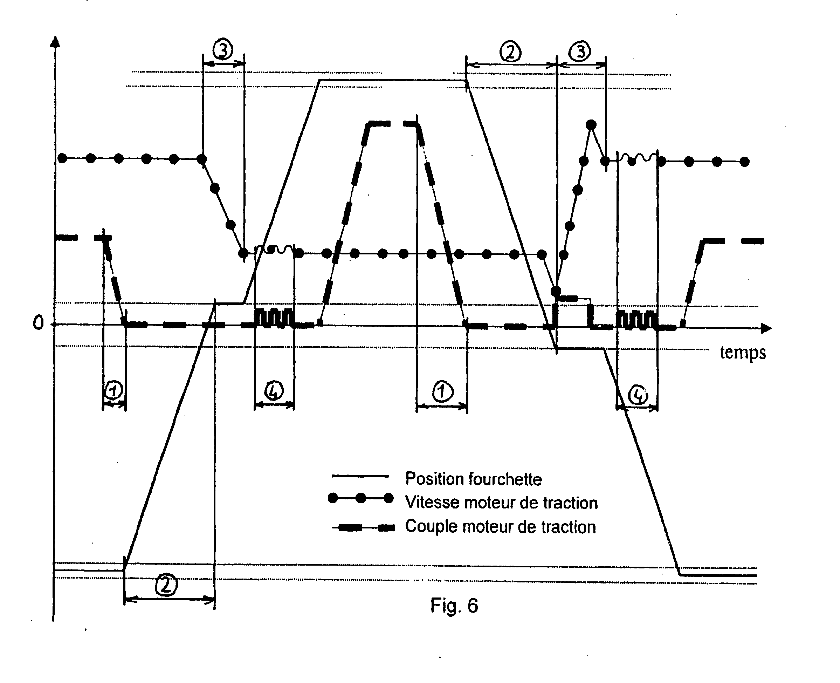

Le chronogramme donné à la figure 6 illustre l'enchaînement des opérations. Quel que soit le sens du changement de vitesse, et quel que soit le passage de vitesses concerné, un changement de vitesse implique d'annuler le couple moteur (zone 1), de passer la boîte de vitesse en position neutre (zone 2), puis implique d'ajuster la vitesse de rotation du moteur au niveau correspondant au futur rapport sélectionné (zone 3), afin de pouvoir engager mécaniquement ledit rapport, avant de piloter à nouveau le moteur au couple voulu.

Au chronogramme de la figure 6, apparaissent aussi des détails préférentiels de réalisations, non limitatifs. Pour faciliter le passage de rapport, on peut provoquer, par un pilotage judicieux du couple du moteur électrique, de petites oscillations de vitesse (zone 4) dont le rôle est de favoriser la prise des crabots lors de l'engagement du rapport suivant. Notons que les variations de couple et les variations de vitesse en jeu sont très faibles : la variation de couple représentée en zone 4 ne sert qu'à accélérer le rotor du moteur M contre sa propre inertie ; la variation de vitesse qui en résulte est elle-même très faible, d'autant plus qu'elle est immédiatement limitée par le début de l'engagement du crabot (reprise des jeux fonctionnels). Il ne faut pas chercher à comparer les variations de couple et de vitesse représentées en zone 4 aux variations de couple et de vitesse représentées dans les autres zones, le dessin étant purement schématique.

De préférence et si les conditions de conduite le permettent, il convient de piloter le couple des moteurs électriques de traction de façon à ce que juste avant de dégager un rapport et juste après avoir engagé un autre rapport, le couple à la roue soit sensiblement équivalent. Si l'on va vers une plus grande démultiplication totale (passer de seconde en première), ceci impose de limiter volontairement le couple du moteur électrique juste après la manoeuvre de changement de vitesse. La diminution de couple se fait sensiblement dans le rapport R. Si l'on va vers une plus petite démultiplication totale (passer de première en seconde), ceci impose d'augmenter volontairement le couple électrique juste après la manoeuvre de changement de vitesse. L'augmentation de couple se fait sensiblement dans le rapport R. Or le couple disponible au moteur est forcément limité à une valeur Cmax. Si l'augmentation prévue de couple amenait à une valeur supérieure à Cmax, il convient, avant la manoeuvre de changement de vitesse, de diminuer le couple jusqu'à une valeur plus petite ou égale à Cmax/R, de telle sorte qu'après la manoeuvre de changement de vitesse, le couple appliqué ne dépasse pas la valeur Cmax.

Notons encore que, lors d'un passage de rapport vers un rapport de moindre démultiplication totale, le moteur électrique doit passer aussi rapidement que possible à une vitesse moindre dès que la boîte est en position neutre. Il faut donc freiner électriquement le moteur, ce qui implique d'être capable d'absorber de l'énergie électrique par ailleurs (par exemple dissipation dans des résistances ou recharge d'élément de stockage).

L'invention permet :
- sur le 1^{er} rapport (grande réduction) de profiter d'un couple important au niveau de la roue, donc avoir des performances dynamiques élevées.
- Sur le 2^{ème} rapport (réduction moindre) de permettre d'atteindre la vitesse maximale prévue du véhicule.
- D'envisager dans certains cas des véhicules à 2 roues motrices au lieu de 4, en augmentant le couple au démarrage (diminution du matériel installé donc de la masse et du prix).

Abordons maintenant quelques cas particuliers de mise en oeuvre de l'invention. On évoque ci-dessous l'utilisation de la chaîne de traction selon l'invention dans un véhicule à quatre roues, sans que ceci ne soit en aucune façon limitatif. Dans un tel véhicule, on suppose qu'il y a au moins deux roues motrices, donc deux chaînes de traction et deux moteurs électriques de traction, chacun de ceux-ci étant connecté à l'arbre d'entrée sur chacune des chaînes de traction. Le but recherché est de toujours réaliser l'opération de changement de rapport en utilisant uniquement les capteurs proposés ci-dessus ; l'objectif de ces mises en oeuvre particulières est donc de ne pas rajouter de capteur de vitesse de la roue en aval du mécanisme de changement de rapport.

Un procédé de changement de rapports pour un véhicule ayant au moins deux roues motrices, chacune équipée d'une chaîne de traction distincte, pour lequel le changement sur chaque roue s'effectue en décalage dans le temps, est connu du document DT 1655194.

Le véhicule peut être à deux ou quatre roues motrices. Le contrôle global du véhicule est assuré par une unité de calcul centrale dite « UC ». L'unité de calcul détermine, selon un algorithme quelconque, à la portée de l'homme du métier et étranger à l'objet de cette invention, le moment opportun pour effectuer le changement de rapport. L'unité de calcul a à sa disposition un certain nombre d'informations :
- capteurs : position pédale d'accélérateur, position ou pression pédale de frein, position du volant, position papillon des gaz et régime moteur thermique (si le véhicule est équipé d'un moteur thermique),
- informations provenant des électroniques de traction : vitesses des moteurs, rapports actuellement engagés ; ces informations sont envoyées régulièrement (toutes les 10ms par exemple) par l'intermédiaire d'un bus CAN ® ou un bus de type similaire. L'unité de calcul peut alors, à partir de ces informations, calculer la vitesse de chacune des roues.

Le changement de rapport proprement dit est réalisé par un ensemble électronique unique assurant le contrôle des deux moteurs électriques de traction d'un essieu et le contrôle du mécanisme de changement de rapport sur les deux roues de l'essieu (ou, dans le cas de deux essieux moteurs, par deux ensembles électroniques assurant le contrôle, chacun, des organes d'un essieu). Cet ensemble électronique reçoit un ordre de changement de rapport depuis l'UC et lui envoie, après exécution, un compte-rendu.

On rappelle que l'on souhaite, pendant la phase de changement de rapport, connaître la vitesse de la roue considérée tout en évitant l'utilisation d'un capteur de vitesse dans ladite roue. Tant qu'un rapport est engagé, la vitesse de la roue est donnée par celle du moteur de traction correspondant. Cependant, la vitesse de la roue est nécessaire dans une phase où le mécanisme de changement de rapport est au neutre. Pendant cette phase, on ne peut pas déduire cette vitesse de l'information vitesse moteur.

Dans l'enchaînement des opérations pour changement de rapport, il est prévu, après le passage au neutre, de réajuster la vitesse de rotation du moteur de traction à un niveau compatible avec la vitesse de la roue lorsque la chaîne de traction utilisera le rapport que l'on envisage de sélectionner. Ceci implique donc la connaissance de cette vitesse de la roue même pendant la phase de changement de rapport.

Lorsqu'un rapport de vitesse est enclenché, l'utilisation combinée des capteurs suivants permet de connaître la vitesse du véhicule :
- le capteur de position intégré au moteur électrique synchrone autopiloté,
- les capteurs de position équipant le dispositif de changement de rapport (boite de vitesse en prise directe ou en position démultipliée).

Le temps pour réaliser le changement de rapport, qualifié ci-dessus de quasi instantané, est environ 300 ms. Dans une première variante de mise en oeuvre particulière, on suppose constante, si ce temps est respecté, la vitesse du véhicule pendant le changement de rapport. La vitesse du véhicule à prendre en compte pendant le changement de rapport est donc la dernière valeur calculée avant le début de l'opération de changement de rapport. Pour se convaincre que cette approximation est acceptable, examinons la variation réelle de vitesse dans l'hypothèse d'une accélération (ou décélération) modérée de 3 m/s2. Pour une manoeuvre de changement de rapport durant 300 ms, on aura une variation de vitesse valant 3 * 0,3 = 0,9 m/s c.à.d. 3 km/h environ. Il est évident que cette approximation reste valable pour des accélérations ou décélérations moyennes et pourvu que le temps de changement de rapport soit respecté.

Le pilotage du changement de rapport effectue les opérations suivantes, pour par exemple un passage de 1^{ère} en 2^{ème}:
- Contrôle rapport 1 engagé.
- Calcul vitesse de la roue à partir de « vitesse moteur traction » et « rapport 1 engagé ».
- Couple moteur ramené à zéro.
- Passage au neutre.
- Réajustement vitesse moteur, sur la base de la vitesse de la roue calculée ci-dessus.
- Engagement rapport 2
- Contrôle rapport 2 engagé
- Rétablissement du couple moteur.

Dans d'autres variantes de mise en oeuvre particulière indiquées ci-dessous, on propose des pilotages du changement de rapport valables même si l'approximation « vitesse constante » évoquée ci-dessus n'est pas valable.

Dans le cas d'un véhicule à quatre roues toutes motrices, on peut décaler dans le temps les changements de rapports sur les deux essieux : d'abord changement de rapport sur un essieu puis changement de rapport sur l'autre essieu. Pendant le changement de rapport sur le premier essieu, la vitesse des roues concernées par un changement de rapport sera calculée par l'unité de calcul à partir des informations vitesses moteurs de traction et rapport en cours sur l'autre essieu, la ou les roues dudit autre essieu jouant alors le rôle de roue dite « roue capteur ». Les vitesses des roues concernées sont transmises par le bus CAN ® vers l'électronique de pilotage du premier essieu, comportant les roues dites « roues manoeuvrées ». Puis on reprend en changeant d'essieu pour les rôles de roue capteur et roue manoeuvrée.

Il est primordial de bénéficier d'une information vitesse véhicule fiable. Si, juste avant de lancer l'ordre de changement de rapport ou pendant le changement de rapport, L'unité de calcul détecte une des deux roues capteur dans une situation anormale (blocage ou patinage), l'information vitesse véhicule sera élaborée à partir de l'autre roue du même essieu. Si les deux roues de l'essieu comportant les roues capteur sont dans une situation anormale (blocage ou patinage) juste avant de lancer l'ordre de changement de rapport, l'ordre de changement de vitesse ne sera pas envoyé jusqu'à retour à une situation normale. Si la situation anormale (blocage ou patinage) sur les deux roues de l'essieu comportant les roues capteur survient alors que la procédure de changement de rapport est en cours sur l'autre essieu, L'unité de calcul envoie comme information « vitesse véhicule », la dernière information calculée jugée fiable. Une autre solution possible est la suivante : rester au neutre sur les roues en cours de changement de rapport jusqu'à ce que la vitesse donnée par la ou les roues capteur soit redevenue fiable.

Pour un véhicule à deux roues motrices, on peut décaler dans le temps les changements de rapports sur les deux roues : d'abord changement de rapport sur la roue gauche par exemple, puis changement de rapport sur la roue droite. Pendant le changement de rapport sur la roue gauche (roue manoeuvrée), la vitesse véhicule sera calculée en local par l'électronique de traction à partir des informations vitesse moteur de traction et rapport en cours sur la roue droite (roue capteur), et inversement.

D'une façon analogue à ce qui a été exposé ci-dessus, si juste avant de lancer l'ordre de changement de rapport, L'unité de calcul détecte la roue capteur dans une situation anormale (blocage ou patinage), l'ordre de changement de vitesse ne sera pas envoyé jusqu'à retour à une situation normale. Si la situation anormale (blocage ou patinage) sur la roue capteur arrive alors que la procédure de changement de rapport est en cours sur l'autre roue, on utilise comme information vitesse véhicule, la dernière information calculée fiable. Là encore, une autre solution possible est la suivante : rester au neutre sur la roue en cours de changement de rapport jusqu'à ce que la vitesse véhicule donnée par la roue capteur soit redevenue fiable.

Dans tous les cas, si une roue se bloque (freinage très violent) pendant son propre changement de rapport et plus particulièrement quand la boite est au neutre, les vitesses moteur de traction et roue correspondante ne sont plus compatibles pour permettre d'enclencher le nouveau rapport. Cette situation n'est pas détectable car la roue est découplée mécaniquement du moteur ; il peut y avoir risque de rupture mécanique dans le dispositif. Cette situation peut être évitée si on interdit la procédure de changement de rapport en cas de freinage très violent, lui-même détecté via la pression de freinage ou via la vitesse d'enfoncement de la pédale de frein ou via une mesure d'accélération longitudinale.

En résumé, l'invention propose un procédé de pilotage du changement de rapport pour un véhicule ayant au moins deux roues motrices chacune équipée d'une chaîne de traction semblable à ce qui a été décrit ci-dessus, dans lequel on décale dans le temps les changements de rapports sur les deux roues motrices : dans une phase initiale, changement de rapport sur une roue dite « manoeuvrée », la vitesse véhicule étant calculée par l'électronique de traction à partir des informations vitesse moteur de traction et rapport en cours sur l'autre roue dite « roue capteur », puis dans une phase suivante, changement de rapport sur ladite autre roue. Pour un véhicule ayant au moins quatre roues motrices dans deux essieux, au moins une roue capteur est située sur l'un des essieux, les roues manoeuvrées étant sur l'autre essieu pendant la phase initiale, et il y a inversion des localisations des roues « capteur » et « manoeuvrée » dans la phase successive.

## Revendications

1. Chaîne de traction pour véhicule automobile, comprenant :
• un porte roue (K) supportant un moyeu rotatif destiné à recevoir une roue (W) motrice et matérialisant un axe de rotation pour ladite roue motrice,
• une roue dentée (3) rotative, ayant le même axe de rotation que l'axe de rotation de ladite roue motrice, la roue dentée étant en prise directe avec le moyeu,
• un arrangement comportant au moins deux pignons (31 et 53) engrenés en permanence avec ladite roue dentée, comportant un arbre d'entrée destiné à être couplé avec l'arbre d'un moteur électrique, chaîne de traction comporte un mécanisme de changement de rapport avec position neutre entre rapports, ledit mécanisme comprenant une prise directe entre l'arbre d'entrée et l'un des pignons, ledit mécanisme comportant, entre l'arbre d'entrée et l'autre des pignons, au moins une autre voie mécanique de transmission à démultiplication différente de la prise directe.

2. Chaîne de traction selon la revendication 1, **caractérisée en ce que** le mécanisme de changement de rapport comporte un crabot (46) permettant de sélectionner l'un ou l'autre des rapports.

3. Chaîne de traction selon la revendication 2 **caractérisée en ce que**, dans ladite autre voie mécanique de transmission, le crabot (46) entraîne la roue dentée via un pignon intermédiaire (6) permettant d'inverser la vitesse de rotation.

4. Chaîne de traction selon la revendication 2 **caractérisée en ce que**, dans ladite autre voie mécanique de transmission, le crabot (46) entraîne la roue directement, sans pignon intermédiaire.

5. Chaîne de traction selon la revendication 1, **caractérisée en ce qu'**elle est dépourvue d'embrayage à friction.

6. Chaîne de traction selon la revendication 1, **caractérisée en ce qu'**elle est à deux rapports seulement.

7. Chaîne de traction selon la revendication 1 **caractérisée en ce qu'**elle comporte un moteur électrique (M), dans laquelle le moteur électrique est du type synchrone auto piloté, le moteur comportant au moins un capteur de position du rotor intégré et utilisé pour assurer le pilotage du moteur.

8. Chaîne de traction selon la revendication 7, **caractérisée en ce que** les seuls capteurs utilisés pour déterminer la vitesse de rotation de la roue sont ledit capteur de position intégré au moteur et un ensemble capteur associé au mécanisme de changement de rapport.

9. Procédé de pilotage du changement de rapport pour un véhicule ayant au moins deux roues motrices chacune équipée d'une chaîne de traction selon la revendication 7 ou 8, dans lequel on décale dans le temps les changements de rapports sur les deux roues motrices : dans une phase initiale, changement de rapport sur une roue dite « manoeuvrée », la vitesse véhicule étant calculée par l'électronique de traction à partir des informations vitesse moteur de traction et rapport en cours sur l'autre roue dite « roue capteur », puis dans une phase suivante, changement de rapport sur ladite autre roue.

10. Procédé de pilotage du changement de rapport selon la revendication 9, pour un véhicule ayant au moins quatre roues motrices dans deux essieux, dans lequel au moins une roue capteur est située sur l'un des essieux, les roues manoeuvrées étant sur l'autre essieu pendant la phase initiale, et inversion des localisations des roues « capteur » et « manoeuvrée » dans la phase successive.

11. Procédé selon l'une des revendications 9 ou 10 dans lequel on interdit la procédure de changement de rapport en cas de freinage supérieur à un seuil prédéterminé.

12. Procédé selon la revendication 9 dans lequel on détecte, pendant la procédure de changement de rapport, le blocage ou le patinage sur la roue capteur et on utilise comme information « vitesse véhicule » la dernière information calculée jugée fiable.

13. Procédé selon la revendication 9 dans lequel on détecte, pendant la procédure de changement de rapport, le blocage ou le patinage sur la roue capteur et on reste au neutre sur la roue manoeuvrée jusqu'à ce que la vitesse de la roue capteur soit redevenue fiable.

14. Procédé selon la revendication 10 utilisant deux roues capteurs dans un essieu, dans lequel on détecte, pendant la procédure de changement de rapport, le blocage ou le patinage d'une roue capteur et on élabore l'information vitesse à partir de l'autre roue capteur.

15. Procédé selon la revendication 10 utilisant deux roues capteurs dans un essieu, dans lequel on détecte pendant la procédure de changement de rapport le blocage ou le patinage des deux roues capteurs et on utilise comme information « vitesse véhicule » la dernière information calculée jugée fiable.

16. Procédé selon la revendication 10 utilisant deux roues capteurs dans un essieu, dans lequel on détecte pendant la procédure de changement de rapport le blocage ou le patinage des deux roues capteurs et on reste au neutre sur les roues manoeuvrées jusqu'à ce que la vitesse d'au moins une roue de l'essieu capteur soit redevenue fiable.

## Claims

1. Traction chain for an automobile vehicle, comprising:
• a wheel support (K) which carries a rotating hub designed to receive a drive wheel (W) and which realises a rotation axis for the said drive wheel,
• a rotating toothed wheel (3) having a rotation axis the same as that of the said drive wheel, the toothed wheel meshing directly with the hub,
• an arrangement comprising at least two gearwheels (31 and 53) which are permanently meshed with the said toothed wheel, comprising an input shaft designed to be coupled with the shaft of an electric motor, **characterised in that** said traction chain comprises a gear ratio change mechanism with a neutral position between gear ratios, the said mechanism comprising direct engagement between the input shaft and one of the gearwheels,
the said mechanism comprising, between the input shaft and the other gearwheel, at least one other mechanical transmission path with a reduction different from that of the direct engagement.

2. Traction chain according to Claim 1,
**characterised in that**
the gear ratio change mechanism comprises a jaw coupling (46) which enables one or other of the gear ratios to be selected.

3. Traction chain according to Claim 2,
**characterised in that**
in the said other mechanical transmission path, the jaw coupling (46) moves the toothed wheel via an intermediate gearwheel (6) which enables the rotation speed to be inverted.

4. Traction chain according to Claim 2,
**characterised in that**
in the said other mechanical transmission path, the jaw coupling (46) moves the wheel directly without any intermediate gearwheel.

5. Traction chain according to Claim 1,
**characterised in that**
it has no friction clutch.

6. Traction chain according to Claim 1,
**characterised in that**
it has only two gear ratios.

7. Traction chain according to Claim 1,
**characterised in that**
it comprises an electric motor (M), the said motor being of the synchronous, self-adjusting type, the motor comprising at least one integrated rotor position sensor used to control the motor.

8. Traction chain according to Claim 7,
**characterised in that**
the only sensors used to determine the wheel rotation speed are the said position sensor integrated in the motor and a sensor aggregate associated with the gear ratio change mechanism.

9. Process for controlling gear ratio changes in a vehicle having at least two drive wheels each equipped with a traction chain according to Claims 7 or 8, in which the gear ratio changes at the two drive wheels are offset in time: in an initial phase, a gear ratio change is effected in a wheel said to be the "manoeuvred" wheel, the vehicle speed being calculated by the traction electronics from information about the traction motor speed and the currently engaged gear ratio at the other wheel, said to be the "sensor wheel", and then, in a subsequent phase, a gear ratio change is effected in the said other wheel.

10. Process for controlling gear ratio changes according to Claim 9, for a vehicle with at least four drive wheels on two axles, in which at least one sensor wheel is located on one of the axles, the manoeuvred wheels being on the other axle during the initial phase, and the location of the "sensor" and "manoeuvred" wheels is inverted during the subsequent phase.

11. Process according to either of Claims 9 or 10, in which the gear ratio change procedure is blocked in the event of braking more violent than a predetermined threshold.

12. Process according to Claim 9 in which, during the gear ratio change procedure, locking or skidding of the sensor wheel is detected and, as the "vehicle speed" information, the last datum calculated which is deemed reliable is used.

13. Process according to Claim 9 in which, during the gear ratio change procedure, locking or skidding of the sensor wheel is detected and the manoeuvred wheel remains in neutral until the speed of the sensor wheel has returned to a reliable value.

14. Process according to Claim 10, using two sensor wheels on an axle, in which, during the gear ratio change procedure, locking or skidding of one sensor wheel is detected and the speed information is worked out from the other sensor wheel.

15. Process according to Claim 10, using two sensor wheels on an axle, in which during the gear ratio change procedure the locking or skidding of the two sensor wheels is detected and, as the "vehicle speed" information, the last datum calculated which is deemed reliable is used.

16. Process according to Claim 10, using two sensor wheels on an axle, in which during the gear ratio change procedure the locking or skidding of the two sensor wheels is detected and the manoeuvred wheels remain in neutral until the speed of at least one wheel on the sensor axle has returned to a reliable value.

## Patentansprüche

1. Antriebsstrang für ein Kraftfahrzeug mit
- einem Radträger (K), der eine drehende Nabe trägt, die ein Antriebsrad (W) aufnehmen kann und eine Drehachse für das Antriebsrad darstellt,
- einem drehenden Zahnrad (3) mit der gleichen Drehachse wie das Antriebsrad, wobei das Zahnrad in direkter Verbindung mit der Nabe steht,
- einer Anordnung mit mindestens zwei Ritzeln (31 und 53), die ständig mit dem Zahnrad in Eingriff stehen, mit einer Eingangswelle, die mit der Welle eines Elektromotors gekoppelt wird, **dadurch gekennzeichnet, dass** der Antriebsstrang eine Schaltvorrichtung mit Leerlaufposition zwischen den Gängen aufweist, wobei die Vorrichtung eine direkte Verbindung zwischen der Eingangswelle und einem der Ritzel besitzt und die Vorrichtung zwischen der Eingangswelle und dem anderen Ritzel mindestens einen anderen mechanischen Übertragungsweg mit unterschiedlicher Untersetzung als die direkte Verbindung aufweist.

2. Antriebsstrang nach Anspruch 1, **dadurch gekennzeichnet, dass** die Schaltvorrichtung eine Klaue (46) aufweist, die es erlaubt, den einen oder anderen Gang auszuwählen.

3. Antriebsstrang nach Anspruch 2, **dadurch gekennzeichnet, dass** beim anderen mechanischen Übertragungsweg die Klaue (46) das Zahnrad über ein Zwischenrad (6) antreibt, was es ermöglicht, die Umdrehungsgeschwindigkeit umzukehren.

4. Antriebsstrang nach Anspruch 2, **dadurch gekennzeichnet, dass** beim anderen mechanischen Übertragungsweg die Klaue (46) das Rad direkt ohne Zwischenrad antreibt.

5. Antriebsstrang nach Anspruch 1, **dadurch gekennzeichnet, dass** er keine Reibungskupplung aufweist.

6. Antriebsstrang nach Anspruch 1, **dadurch gekennzeichnet, dass** er nur zwei Gänge aufweist.

7. Antriebsstrang nach Anspruch 1, **dadurch gekennzeichnet, dass** er einen Elektromotor (M) umfasst, der ein selbstgesteuerter Synchronmotor ist, welcher mindestens einen integrierten Positionssensor des Rotors zum Steuern des Motors aufweist.

8. Antriebsstrang nach Anspruch 7, **dadurch gekennzeichnet, dass** die einzigen Sensoren, die zur Bestimmung der Umdrehungsgeschwindigkeit des Rads verwendet werden, der in den Motor integrierte Positionssensor und eine der Schaltvorrichtung zugeordnete Sensoreinheit sind.

9. Verfahren zum Steuern des Schaltens für ein Fahrzeug mit mindestens zwei Antriebsrädern, die jeweils mit einem Antriebsstrang nach Anspruch 7 oder 8 versehen sind, bei dem die beiden Antriebsrädern zeitversetzt geschaltet werden: in einer Eingangsphase wird ein so genanntes "betätigtes" Rad geschaltet, wobei die Antriebselektronik die Geschwindigkeit des Fahrzeugs ausgehend von den Informationen über die Drehzahl des Antriebsmotors und den am anderen Rad, dem so genannten "Sensorrad", eingelegten Gang berechnet, in einer folgenden Phase wird dann das andere Rad geschaltet.

10. Verfahren zum Steuern des Schaltens nach Anspruch 9 für ein Fahrzeug mit mindestens vier Antriebsrädern in zwei Achsen, bei dem sich in der Eingangsphase mindestens ein Sensorrad an einer der Achsen und die betätigten Räder an der anderen Achse befinden und bei dem in der folgenden Phase die Festlegung der Sensor- und der betätigten Räder umgekehrt wird.

11. Verfahren nach einem der Ansprüche 9 oder 10, bei dem das Schalten bei einem Bremsen, das eine vorher festgelegte Grenze übersteigt, gesperrt wird.

12. Verfahren nach Anspruch 9, bei dem während des Schaltvorgangs das Blockieren oder Durchdrehen am Sensorrad festgestellt wird und als Information über die Geschwindigkeit des Fahrzeugs die letzte als verlässlich betrachtete berechnete Information verwendet wird.

13. Verfahren nach Anspruch 9, bei dem während des Schaltvorgangs das Blockieren oder Durchdrehen am Sensorrad festgestellt wird und das betätigte Rad im Leerlauf bleibt, bis die Geschwindigkeit des Sensorrads wieder verlässlich ist.

14. Verfahren nach Anspruch 10, das zwei Sensorräder in einer Achse verwendet, bei dem während des Schaltvorgangs das Blockieren oder Durchdrehen eines Sensorrads festgestellt wird und die Geschwindigkeitsinformation ausgehend vom anderen Sensorrad erstellt wird.

15. Verfahren nach Anspruch 10, das zwei Sensorräder in einer Achse verwendet, bei dem während des Schaltvorgangs das Blockieren oder Durchdrehen der beiden Sensorräder festgestellt wird und als Information über die Fahrzeuggeschwindigkeit die letzte als verlässlich betrachtete berechnete Information verwendet wird.

16. Verfahren nach Anspruch 10, das zwei Sensorräder in einer Achse verwendet, bei dem während des Schaltvorgangs das Blockieren oder Durchdrehen der beiden Sensorräder festgestellt wird und die betätigten Räder im Leerlauf bleiben, bis die Geschwindigkeit von mindestens einem Rad der Sensorachse wieder verlässlich ist.
